# EUROPEAN PATENT APPLICATION

(11) **EP 1 460 524 A2**
(43) Date of publication of application: **22.09.2004**
(21) Application number: 04005903.2
(22) Date of filing: 12.03.2004
(51) Int. Cl.: G06F 3/033

(54) **Motion-based electronic device control apparatus and method**

(30) Priority: 14.03.2003 KR 2003016022
(71) Applicant: Samsung Electronics Co., Ltd., Suwon-city, Gyeonggi-do (KR)
(72) Inventor: Kang, Kyoung-ho, Giheung-eub Yongin-si Gyeonggi-do (KR); Kim, Dong-yoon, Seodaemun-gu, Seoul (KR); Bang, Won-chul, Sungnam-si, Gyeonggi-do (KR); Choi, Eun-seok, Gangnam-gu Seoul (KR); Chang, Wook, Gangnam-gu Seoul (KR)
(74) Representative: Grünecker, Kinkeldey, Stockmair & Schwanhäusser Anwaltssozietät

(57) **Abstract**

An apparatus having a motion detection unit adapted to detect at least one motion of a body of the apparatus. A data storage unit is provided to store command codes for a controlled device and information on at least one specific motion of the apparatus. A transmission unit transmits data to the controlled device. A control unit obtains information from an electrical signal detected from the motion detection unit. It further controls the transmission unit so that if the motion corresponds to the specific motion, a corresponding command code is output to the controlled device.

## Description

### CROSS-REFERENCE TO RELATED APPLICATIONS

This application claims the benefit of Korean Patent Application No. 2003-16022, dated March 14, 2003, in the Korean Intellectual Property Office, the disclosure of which is incorporated herein by reference.

### BACKGROUND

### 1. Field

This disclosure teaches techniques related to an input system. Specifically, a motion-based electric device control apparatus and techniques for remotely controlling a controlled device based on motions generated in three-dimensional space are discussed.

### 2. Description of the Related Art

A remote controller is often used to remotely control an electronic device or a plurality of electronic devices. The remote controller has command input buttons corresponding to different functions to be performed by the controlled device. It is designed to output a remote control signal to the controlled device in correspondence to a selected button. Such a remote controller could be wireless or wired. Further, the controlled device receiving the remote control signal is designed to perform operations corresponding to the information received.

However, as controlled devices become increasingly capable of performing diverse functions, the number of inputs (and the buttons required to perform the input) have increased. In some cases, the remote controller is designed to so that a function is requested using a combination of inputs. In such cases, it becomes more difficult to intuitively select or set a function. Moreover, because of the difficulty involved, most users ignore diverse functions and mainly use only a few particular frequently used functions. Therefore, the additional functionality provided by the device is unused even though a higher price was paid for such additional functionalities.

### SUMMARY

In order to solve the above problem, it is an aspect of the present invention to provide motion-based electric device control apparatus and method capable of remotely controlling a device through simple motions in the two-dimensional plane or the three-dimensional space.

In order to achieve the above aspect, there is provided an apparatus comprising a motion detection unit that detects at least one motion of a body of the apparatus. A data storage unit stores command codes for a controlled device and information on at least one specific motion of the apparatus. A transmission unit transmits data to the controlled device. A control unit obtains information from an electrical signal detected from the motion detection unit. It further controls the transmission unit so that if the motion corresponds to the specific motion, a corresponding command code is output to the controlled device.

In a specific enhancement, the body is pen shaped. In another specific enhancement the body is bar shaped.

In yet another specific enhancement the motion detection unit includes at least one acceleration sensor adapted to output electric signals based on accelerations in a direction of motion of the body.

In still another specific enhancement, the motion detection unit includes at least one angular velocity sensor adopted to output electrical signals based on displacements of the body.

In still another enhancement, the data storage unit further includes command codes respectively corresponding to a plurality of devices and information stored in correspondence to at least one specific motion each for each of the device.

More specifically, the control unit changes modes to control a specific controlled device if motion information selecting a specific controlled device from the plurality of controlled devices is selected.

More specifically, the motion selecting the specific controlled device is a motion for writing letters corresponding to a name of the specific controlled device.

In another specific enhancement, the apparatus comprises a display unit for displaying states based on the motions of the body.

More specifically, the control unit controls the display unit to display apparatus states based on electrical signals transferred from the motion detection unit.

Even more specifically, the display unit includes at least one or more of an LED, an LCD, and a sound-generating device. In another specific enhancement, the apparatus comprises at least one input for inputting extra commands.

In another specific enhancement, the motion detection unit includes a gyro sensor for outputting an electric signal based on 3-axis displacements caused by motions of an apparatus body.

Another aspect of the disclosed teachings is a method comprising detecting at least one motion information from motions of a body. A search is performed to determine whether command codes corresponding to the detected motion exist in established command codes for controlling a controlled device. The corresponding command codes are transmitted to the controlled device if command codes exist for the controlled device corresponding to the motion information.

In a specific enhancement, command codes are established using a sub-process including establishing command codes respectively corresponding to a plurality of devices and information corresponding to at least one specific motion each on each of said plurality of devices.

More specifically, modes are changed to control a specific controlled device from the plurality of controlled devices. if motion information selecting the specific controlled device from the plurality of devices is selected.

In another specific enhancement, apparatus operation state are displayed based on the detected motion information.

### BRIEF DESCRIPTION OF THE DRAWINGS

The disclosed teachings will be described in detail with reference to the following drawings in which like reference numerals refer to like elements, and wherein:

Fig. 1 is a schematic block diagram showing a non-limiting exemplary motion-based electric device control apparatus embodying some of the disclosed teachings.

Fig. 2 is a view for showing a schematic structure of the non-limiting exemplary motion-based electric device control apparatus.

Fig. 3 and Fig. 4 show exemplary non-limiting flow chart explaining operations of the motion-based electric device control apparatus of Fig. 1 and Fig. 2.

Fig. 5 is a view for showing a processing of an exemplary non-limiting pen-type motion-based electronic device control apparatus and a controlled device.

### DETAILED DESCRIPTION

Hereinafter, the disclosed teachings will be described in detail with reference to the accompanying drawings.

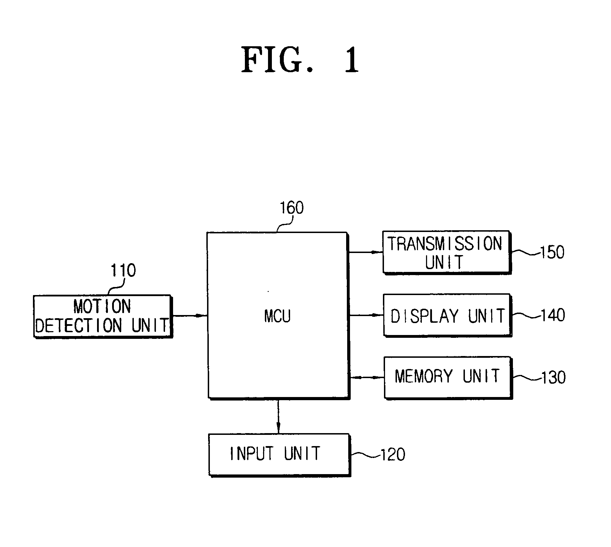

Fig. 1 is a schematic block diagram showing a non-limiting exemplary motion-based electric device control apparatus embodying some of the disclosed teachings. The control apparatus comprises a motion detection unit 1 10, an input unit 120, a memory unit 130, a display unit 140, a transmission unit 150, and a main control unit(MCU) 160,

The motion detection unit 110 consists of a gyro sensor for outputting an electric signal based on 3-axis displacements caused by motions of the apparatus body. It further includes an acceleration sensor for outputting an electric signal based on 3-axis accelerations generated from motions of a pen-type body. It could also include other motion detection sensors. Further, the motion detection unit 1 10 includes an operation processor for processing an electric signal output from each sensor. The motion detection unit outputs the processing result to the MCU 160.

The input unit 120 receives and transfers to the MCU 160 commands directly input by a user in addition to commands based on a user's specific motion detected by the motion detection unit 110.

The memory unit 130 stores an operating system for the MCU 160. command codes for a controlled device, and information on specific motions of the apparatus. The memory 130 may be installed outside or in the MCU 160 depending on the desired size of the apparatus.

The display unit 140 displays operation states of the apparatus. The display unit 140 may be light-emitting elements such as a light-emitting diode(LED), a liquid crystal display(LCD), and so on, or a sound-generating device such as a speaker. Further. the light-emitting elements and the sound-generating device may be used in combination.

The transmission unit 150 outputs the command codes to a controlled device under the control of the MCU 160. The command codes are output using wires or in a wireless fashion from the transmission unit 150.

The MCU 160 obtains motion information on the apparatus body through an electric signal transferred from the motion detection unit 110. If the obtained motion information corresponds to a command code stored in the memory unit 130 the transmission unit 150 is controlled to transmit the corresponding command code to the controlled device.

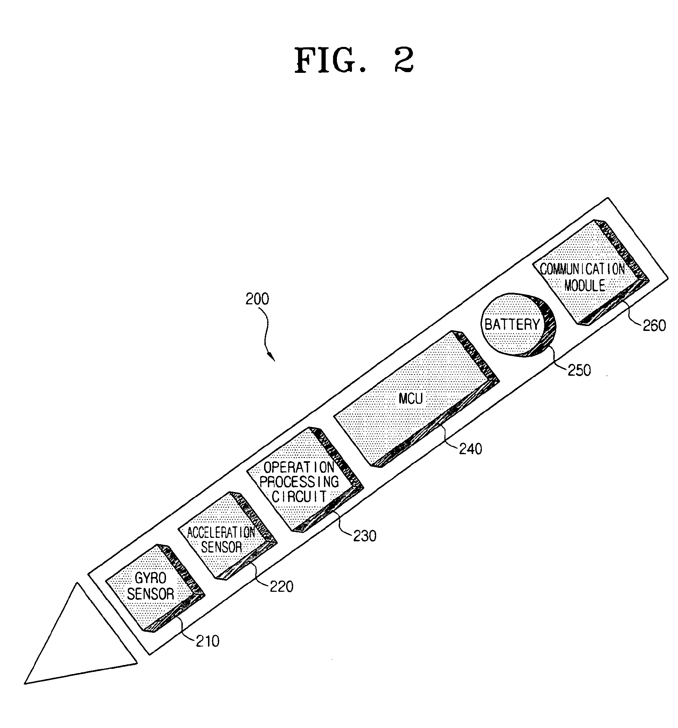

Fig. 2 is a view for showing a schematic structure of the non-limiting exemplary motion-based electric device control apparatus. The structure shown in Fig. 2 represents a system-on-chip, although it should be clear that the apparatus could be implemented on multiple chips. The exemplary devices shown in Figs. 1 and 2 achieve the same function although alternate designs based on various combinations of system-on-chip designs could be used. In addition, the functionalities could be implemented in any combination of hardware and software implementations.

A control apparatus 200 shown in Fig. 2 has a gyro sensor 210, an acceleration sensor 220, an operation processing circuit 230, a control processor 240, a battery 250, and a communication module 260 placed in order inside its pen-type case from the pen tip portion. The operation processing circuit 230 calculates and outputs the displacements and velocities of the pen-type body based on electric signals continuously output from the gyro sensor 210 and the acceleration sensor 230, respectively. While the operation processing circuit 230 is independently installed in the exemplary implementation of Fig. 2, it may be built in the control processor 240.

The user holds the apparatus and makes predetermined motions depending on a desired control function. The pen-type motion-based electric device control apparatus 200, as described above, transmits the command codes to a controlled device based on the motions made by the user.

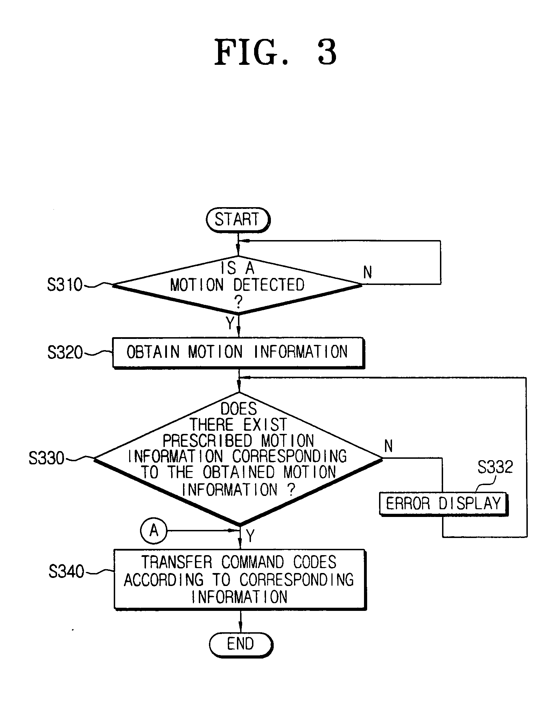

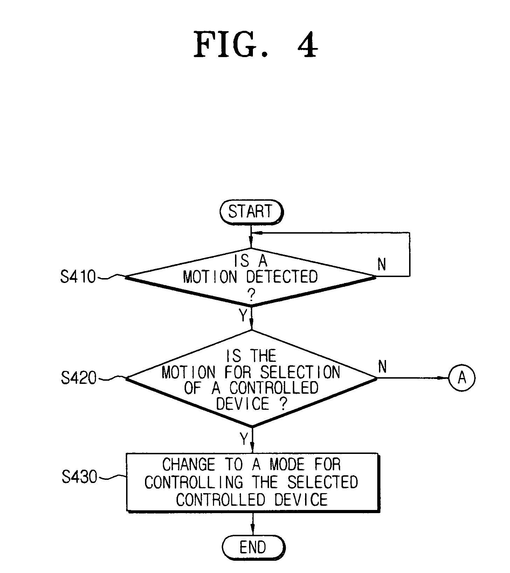

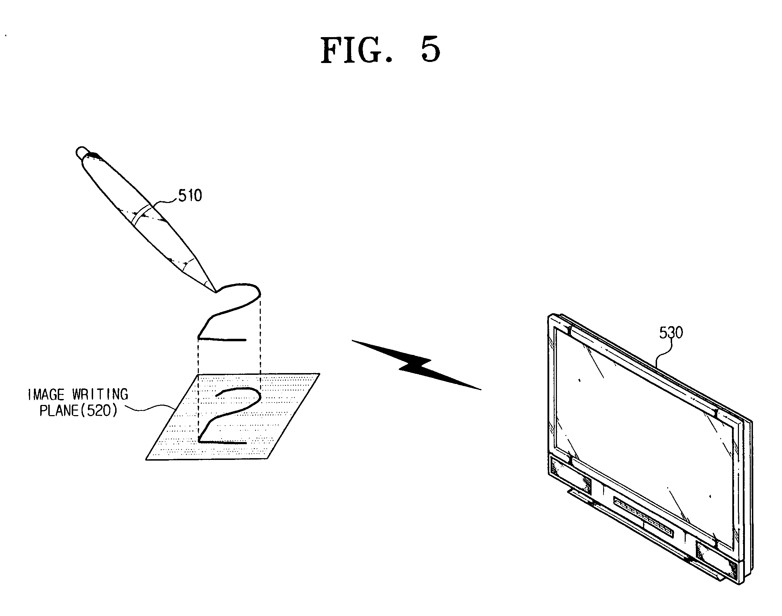

Fig. 3 and Fig. 4 show exemplary non-limiting flow chart explaining operations of the motion-based electric device control apparatus of Fig. 1 and Fig. 2. First, as shown in Fig. 5, a user generates moves the pen-type control apparatus in space (for example, "TV") in order to control a television. The gyro sensor 210 and the acceleration sensor 220 of the motion detection unit 110 output electric signals based on the motions of the pen-type control apparatus 200. The signals output from the respective sensors are calculated in the operation processing circuit 230 and then outputted to the MCU 160 or 240(hereinafter, the reference numeral 240 is used for descriptions related to both 240 and 160) (S310). Thus, the MCU 240 obtains a result output from the operation processing circuit 230 and further obtains motion information (S320).

That is, the MCU 240 projects an image on a virtual writing plane 520 based on the motions according to the calculation result transmitted from the operation processing circuit 230. Next, the MCU 420 searches whether the memory unit 130 stores motion information corresponding to the projected result of the predetermined motion information with respect to a particular motion based on the projected information (S330). At this time, if the memory unit 130 has motion information corresponding to the projected result, the MCU 240 reads out command codes stored in the memory unit 130 corresponding to the motion information. It then transfers the read-out command codes to a television 530 through a communication module 260 (S340).

However, if the motion information corresponding to the projected result does not exist in the memory unit 130, the MCU 240 can display errors through the display unit 140. The error can be displayed also on the display of a controlled device, that is, of a television 530. That is, in case that there is a display unit 140 on the body of a device, the MCU 240 can change LED colors or display error messages on an LCD screen. Errors can also be expressed by sound through a speaker. Further, if the display unit of the television 530 is used for displaying errors, the apparatus transfers error command codes to the television 530, and the television 530 displays an error message based on the error command codes transferred to the television 530. The display unit mounted to the body of the apparatus can also display help topics.

The motion-based electronic device control apparatus according to the disclosed teachings can be used to control a plurality of devices at homes. That is, the control apparatus can include identification codes and command codes corresponding to a plurality of controlled devices in the memory unit 130. It can select a desired controlled device from the plurality of controlled devices through specified motions.

Fig. 4 is a flow chart for explaining operations for the motion-based electronic device control apparatuses shown in Fig. 1 and Fig. 2 to select a controlled device. In the control apparatus, if a motion is generated by a user as in the operations of Fig.3 (S410), the MCU 240 obtains motion information from a detected signal, and decides whether the obtained motion information is a motion for selecting a controlled device(S420). If the motion information is information for selecting a controlled device, the MCU(240) carries out operations for changing into a mode for controlling a controlled device selected from the information based on the selection motion (S430).

After the mode change, the MCU 240 searches command codes for the selected controlled device and transfers the command codes to the controlled device.

Many different motions can be used for selecting a controlled among the plurality of controlled devices. For example, a motion for writing letters corresponding to a general name of a device can be used. That is, when there are a television, a VTR, a DVD player, an air conditioner, and so on, that are to be controlled using the motion-based electronic device control apparatus and a user wants to control the television, the user can make motions for writing letters 'TV' in space. If the user wants to control the air conditioner, the user can select the air conditioner by making motions for writing 'AIR.' An alternate technique for selecting a controlled device is to establish serial numbers to individual devices, so that a user can select a controlled device by making motions for writing a number corresponding to a desired device in space. That is, a user can select a desired controlled device out of plurality of devices using many different ways.

While the above descriptions are for a motion-based electronic device control apparatus that is pen-shaped, the apparatus may be formed in a bar shape, or in other diverse shapes. Further, it has been explained that writing motions and command input motions are carried out in the three-dimensional space, but it is well known that it is possible to transfer command codes and select controlled devices with motions performed in the two-dimensional plane.

As stated above, when a user wants to set controlled device to perform a desired function, the motion-based electronic device control apparatus and the techniques described herein enable the user to intuitively set the function just like using a pen. Thereby, the user can avoid learning additional ways of setting functions as in conventional remote controllers. Further, the manufacturers can reduce the number of buttons (or other inputs) to perform different functions.

Further, plurality of devices used at home can be controlled with one control apparatus replacing several remote controllers.

This also could reduce breakdowns in remote controllers, thereby avoiding replacement costs.

While the invention has been shown and described with reference to certain example implementations thereof, it will be understood by those skilled in the art that various changes in form and details may be made therein without departing from the spirit and scope of the invention as defined by the appended claims.

## Claims

1. An apparatus comprising:
a motion detection unit adapted to detect at least one motion of a body of the apparatus;
a data storage unit adapted to store command codes for a controlled device and information on at least one specific motion of the apparatus;
a transmission unit adapted to transmit data to the controlled device: and
a control unit adapted to obtain information from an electrical signal detected from the motion detection unit, and further adapted to control the transmission unit so that if said at least one motion corresponds to said at least one specific motion, a corresponding command code is output to the controlled device.

2. The apparatus of claim 1, wherein the body is pen shaped.

3. The apparatus of claim 1, wherein the body is bar shaped.

4. The apparatus of claim 1, wherein the motion detection unit includes:
at least one acceleration sensor adapted to output electric signals based on accelerations in a direction of motion of the body.

5. The apparatus of claim 1, wherein the motion detection unit includes:
at least one angular velocity sensor adopted to output electrical signals based on displacements of the body.

6. The apparatus of claim 1, wherein the data storage unit further includes command codes respectively corresponding to a plurality of devices and information stored in correspondence to at least one specific motion each for each of the device.

7. The apparatus of claim 6. where the control unit changes modes to control a specific controlled device if motion information selecting a specific controlled device from the plurality of controlled devices is selected.

8. The apparatus of claim 6, wherein the motion selecting the specific controlled device is a motion for writing letters corresponding to a name of the specific controlled device.

9. The apparatus of claim 1, further comprising a display unit for displaying states based on the motions of the body.

10. The apparatus of claim 9, wherein the control unit controls the display unit to display apparatus states based on electrical signals transferred from the motion detection unit.

11. The apparatus of claim 9, wherein the display unit includes at lease one or more of an LED, an LCD, and a sound-generating device.

12. The apparatus of claim 1, further comprising at least one input for inputting extra commands.

13. The apparatus of claim 1, wherein the motion detection unit includes a gyro sensor for outputting an electric signal based on 3-axis displacements caused by motions of an apparatus body

14. A method comprising:
detecting at least one motion information from motions of a body;
searching whether command codes corresponding to the detected motion exist in established command codes for controlling a controlled device; and
transmitting the corresponding command codes to the controlled device if command codes exist for the controlled device corresponding to the motion information.

15. The method of claim 14, wherein command codes are established using a sub-process including:
establishing command codes respectively corresponding to a plurality of devices and information corresponding to at least one specific motion each on each of said plurality of devices.

16. The method of claim 15 further including:
changing modes to control a specific controlled device from the plurality of controlled devices, if motion information selecting the specific controlled device from the plurality of devices is selected.

17. The method of claim 14, further comprising:
displaying apparatus operation state based on the detected motion information.
